# EUROPÄISCHE PATENTANMELDUNG

(11) **EP 0 607 881 A1**
(43) Veröffentlichungstag der Anmeldung: **27.07.1994**
(21) Anmeldenummer: 94100499.6
(22) Anmeldetag: 14.01.1994
(51) Int. Cl.: G02B 6/42

(54) **Anordnung zur Ankopplung eines Lichtwellenleiters**

(30) Priorität: 20.01.1993 DE 4301456
(71) Anmelder: ROBERT BOSCH GMBH, 70442 Stuttgart (DE)
(72) Erfinder: Kuke, Albrecht, Dr., D-71549 Auenwald (DE); Schwaderer, Bernhard, Dr., D-71554 Weissach i.T. (DE)

(57) **Zusammenfassung**

2.1 Es soll ein Lichtwellenleiter (vorzugsweise eine Singlemode-Faser oder ein optischer Streifenwellenleiter) an ein optisches Sende- oder Empfangselement (insbesondere Halbleiterlaser-Chip) angekoppelt werden.

2.2 Es sind zwei Träger (1, 1') verschiebbar aufeinander gelagert. Auf der Kehrseite (20) eines Trägers (1') befindet sich der Lichtwellenleiter (25). Der Verlauf des Lichtbündels (11) zwischen Lichtwellenleiter (25) und einem Sende- bzw. Empfangselement (4) kreuzt die Auflagefläche (A-A').

2.3 Der auf der Substratoberfläche montierte Laser (4) läßt sich hermetisch dicht von dem Lichtwellenleiter (25) trennen, wobei das Substrat (1) als Gehäuseboden dient.

## Beschreibung

Die Erfindung betrifft eine Anordnung nach dem Oberbegriff des Patentanspruches 1.

Bei der Ankopplung eines Lichtwellenleiters an ein optisches Sende- oder Empfangselement ist eine genaue Justierung sehr wichtig. Aus der europäischen Patentanmeldung 395 854 ist es bekannt, den Lichtwellenleiter und das optische Sende- bzw. Empfangselement auf verschiedenen Trägern zu fixieren, die mit ihren Trägeroberflächen verschiebbar aufeinanderliegen. Das Lichtbündel zwischen dem Lichtwellenleiter einerseits und dem Sende- bzw. Empfangselement andererseits gelangt durch zweimalige Spiegelung an je einer auf den Trägern befindlichen Spiegelebene vom Lichtwellenleiter zum optisch aktiven Element oder umgekehrt. Durch Verschieben der Träger gegeneinander wird eine laterale Justierung des Lichtbündels gegenüber dem Lichtwellenleiter bzw. optisch aktiven Element erreicht.

In der europäischen Patentanmeldung 535 690 ist vorgeschlagen, einen einteiligen Träger aus einkristallinem Silizium zu verwenden, auf dessen Unterseite mindestens ein Lichtwellenleiterende in einer Nut fixiert ist und auf dessen Oberseite mindestens ein Empfangselement vorgesehen ist, dessen lichtempfindliche Fläche der Unterseite zugewandt ist. Dabei ist der Lichtwellenleiter in einer V-Nut befestigt, in der sich ein Spiegel befindet. Das Licht wird vom Lichtwellenleiter in den Träger eingekoppelt und am totalreflektierenden Spiegel reflektiert. Es gelangt von dort durch den Träger hindurch zum Empfangselement auf der Oberseite des Trägers.
Auch aus der deutschen Patentanmeldung DE 35 43 558 ist es bekannt, einen Lichtwellenleiter an der Unterseite und einen Empfänger an der Oberseite eines Trägers vorzusehen. Daß der Träger auch strahlungsdurchlässig sein kann, ist aus der deutschen Patentanmeldung DE 41 06 721 bekannt.

Mit der Erfindung wird eine Lösung für die Aufgabe vorgeschlagen, insbesondere einen Halbleiterlaser-Chip an einen Lichtwellenleiter, vorzugsweise eine Singlemode-Faser oder einen optischen Streifenwellenleiter, anzukoppeln. Dabei soll der Laser und der Wellenleiter jeweils auf verschiedenen Seiten eines als Substrat dienenden Silizium-Wafers angebracht sein und das Licht das Siliziumsubstrat, das im Infrarotlicht-Bereich durchlässig ist, durchdringen. Diese Anordnung bietet den Vorteil, daß der auf einer Substratoberfläche montierte Laser hermetisch dicht von dem Lichtwellenleiter getrennt ist und daher leicht hermetisch dicht eingeschlossen werden kann, wobei das Substrat als Gehäuseboden dient. Die Strukturierung der erforderlichen Flächen zur Lichtumlenkung durch Spiegelung und Lichtbrechung wird auf hochgenaue Weise durch anisotrope Ätztechnik von Silizium erzeugt. Bei der Laser-Wellenleiter-Kopplung sind Toleranzen im Submikrometerbereich erforderlich. Die Summe aller Toleranzen bei der Ätztechnik und Montage der optischen Komponenten kann die erforderlichen Toleranzen, besonders lateral zur Strahlrichtung überschreiten. Daher wird auch eine Justagemöglichkeit vorgesehen.

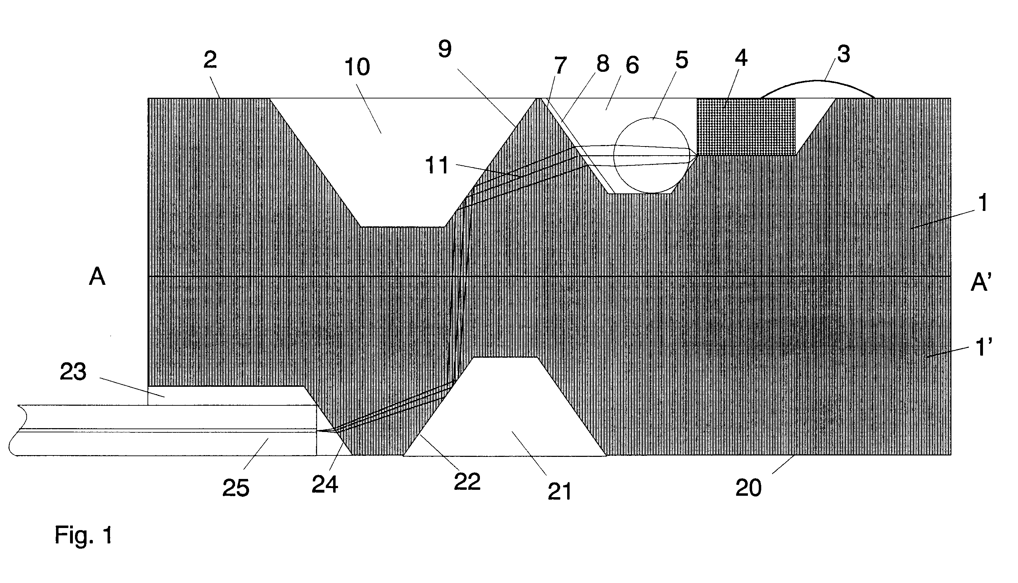

Figur 1 zeigt ein erstes Ausführungsbeispiel der erfindungsgemäßen Lösung. Ein (insbesondere einteiliger) Träger 1 aus vorzugsweise einkristallinem Silizium (Siliziumsubstrat) hat auf seiner Oberseite 2 anisotrop geätzte Vertiefungen zur Aufnahme einer kantenemittierenden Halbleiterlaserdiode 4 und einer Abbildungsoptik, vorzugsweise einer Kugellinse 5 in einer ebenfalls anisotrop geätzten Vertiefung 6. Diese Vertiefung 6 weist eine lichtbrechende Seitenwand 7 auf, die mit einer Antireflexionsbeschichtung 8 versehen ist. Eine lichtreflektierende Seitenwand 9 ist an einer weiteren anisotrop geätzten Vertiefung 10 vorgesehen. Das aus dem Laser 4 austretende Lichtbündel durchdringt nach Kollimierung bzw. Fokussierung durch die Linse 5, Brechung an der Fläche 7 und Reflexion an der Fläche 9 den Träger 1 nahezu senkrecht zu dessen ( - abgesehen von den Vertiefungen - ebenen) Oberseite 2. Der Winkel zwischen der Normalen auf der Oberseite 2 und der Strahlrichtung beträgt nur etwa 6,3 Grad.

Auf der Substratunterseite 20 ist ebenfalls durch anisotrope Ätztechnik eine Vertiefung 21 mit einer reflektierenden Seitenfläche 22 und eine V-Nut 23 mit einer lichtbrechenden Stirnfläche 24 erzeugt. Die V-Nut dient gleichzeitig zur Aufnahme einer Lichtleitfaser 25. Aus symmetriegründen tritt das aus der Laserdiode 4 (mit seinem Zentralstrahl parallel zur Substratoberfläche 2) austretende Lichtbündel 11 auch wieder mit parallel zur Substratunterseite 20 verlaufendem Zentralstrahl in die Lichtleitfaser 25 ein.

Um eine justagemöglichkeit vorzusehen, kann das Substrat entlang einer Trennlinie A - A' in zwei Teilsubstrate 1 und 1' aufgeteilt sein. Durch gegenseitige laterale Verschiebung der beiden Substrate 1 und 1' sowohl in den Zeichenebene als auch senkrecht dazu läßt sich eine Justage des Lichtbündels 11 erreichen.

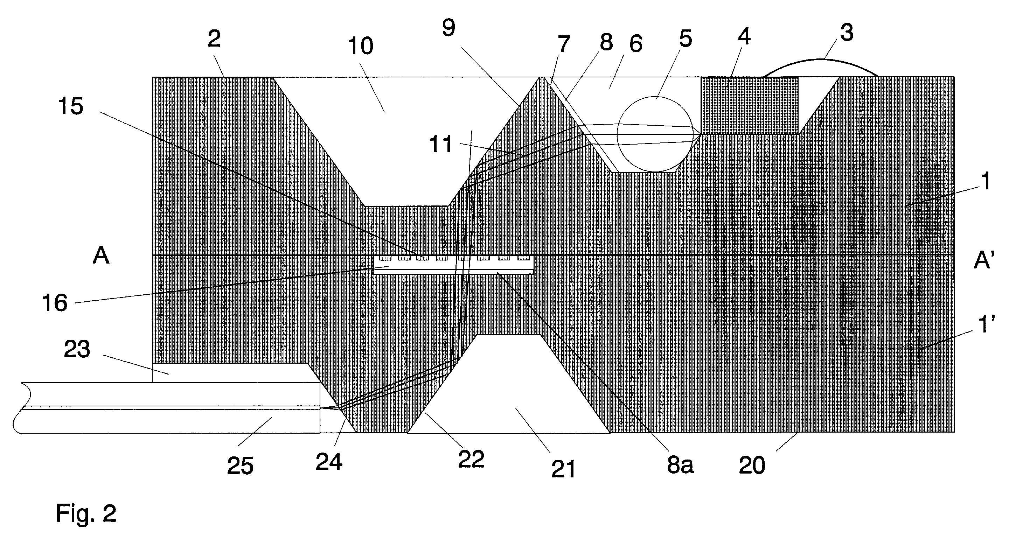

Fig. 2 zeigt ein Ausführungsbeispiel, bei welchem an Stelle einer Abbildung mit einer einzelnen Linse 5 eine weitere Linse 15 eingesetzt ist. Diese Linse 15 ist als Fresnellinse ausgebildet und sitzt auf der Unterseite des Teilsubstrates 1. Die Oberseite der Teilsubstrates 1' hat an der entsprechenden Stelle eine Vertiefung 16, die ebenfalls durch anisotropes Ätzten oder ein anderes Verfahren hergestellt sein kann. Zur Verminderung der Reflexionsverluste an der Grenzfläche Luft-Silizium können Antireflixionsbeschichtungen 8, 8a aufgebracht sein.

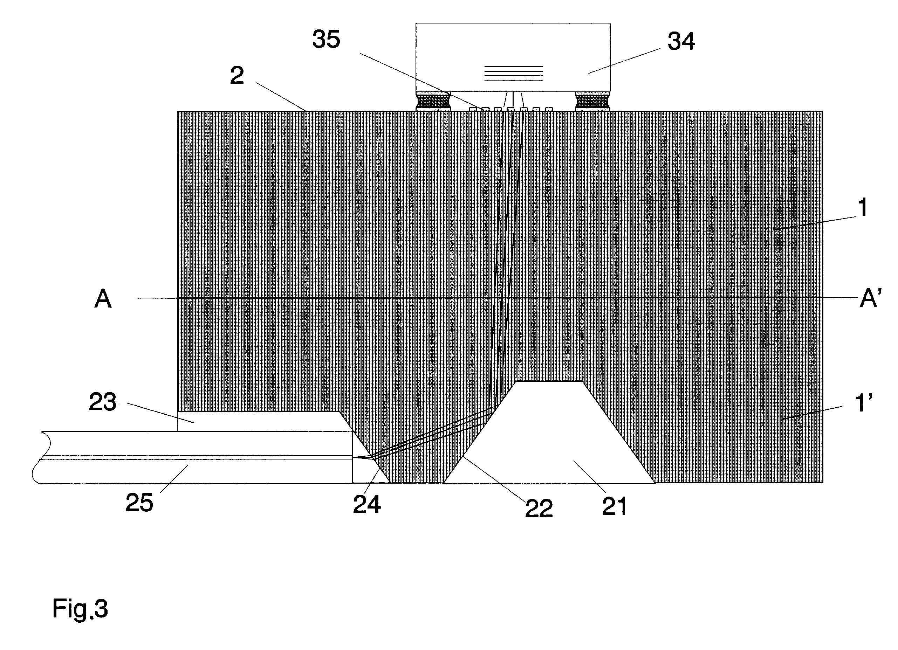

Fig. 3 zeigt ein Ausführungsbeispiel, bei welchem nicht eine kantenemiterende Laserdiode sondern eine oberflächenemittierende Laserdiode 34 (SELD Surface Emitting Laser Diode) eingesetzt ist. Hier wird die abbildende Linse unmittelbar vor dem Laser auf der Trägeroberfläche 2 als Fresnellinse 35 angebracht. Die Fresnellinse kann entweder durch Strukturierung des siliziums selbst oder durch Aufbringen und Strukturieren einer besonderen Schicht hergestellt sein.

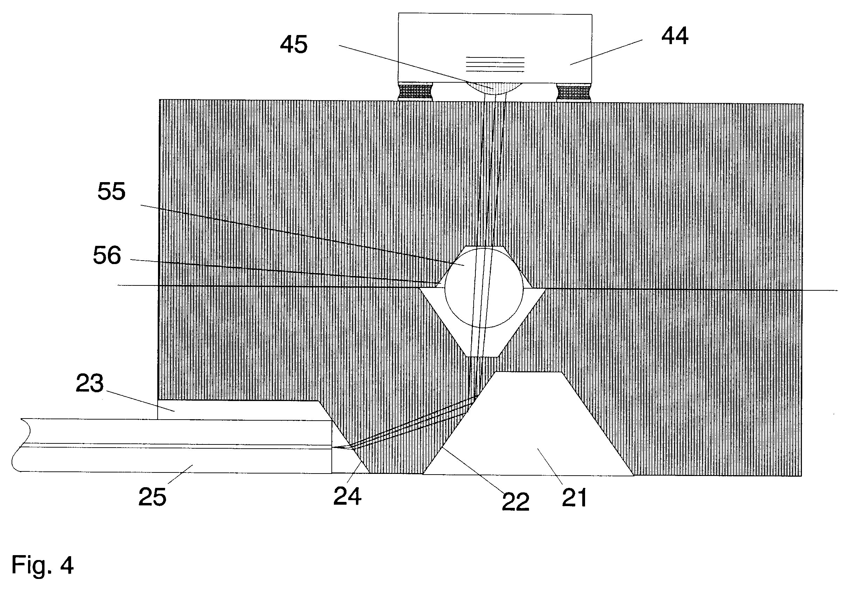

Fig. 4 zeigt ein Ausführungsbeispiel mit einer oberflächenemittierenden Laserdiode 44, die an ihrer Lichtaustrittsseite eine Linse 45 trägt.

Die in Figur 2 gezeigte Fresnellinse 15 als Fokussierungslinse kann auch in den anderen Beispielen eingesetzt werden.

Als Fokussierungslinse kann auch eine andere Linse, beispielsweise eine Kugellinse 55 (Figur 4) in einer anisotrop geätzten Vertiefung 56 eingesetzt werden.

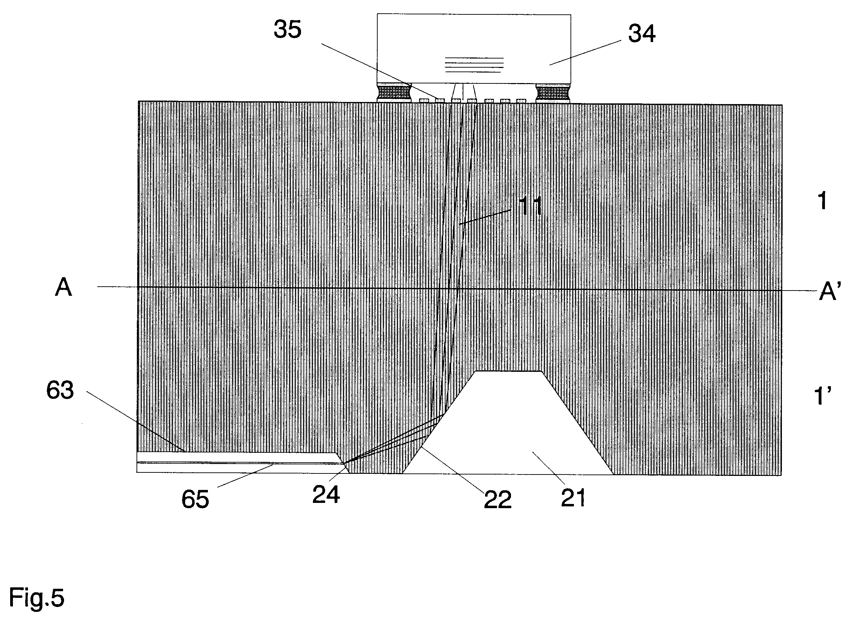

Figur 5 zeigt ein Ausführungsbeispiel, bei dem nicht in eine Faser sondern in einen Streifenwellenleiter 65 eingekoppelt ist, der beispielsweise aus Polyimid, Siliziumoxinitrid oder einem anderen gebräuchlichen Material bestehen kann und als vergrabener Wellenleiter, streifenbelasteter Wellenleiter, Rippenwellenleiter usw. ausgebildet sein kann. Die anisotrop geätzte, flache Vertiefung 63 für diesen Wellenleiter hat eine ebenso wie in den anderen Figuren geneigte Stirnfläche 24. Da aber im Fall der Figur 5 die Lichtbrechung nicht an der Grenzfläche Silizium-Luft, sondern an der Grenzfläche Silizium-Wellenleiter erfolgt, muß ein anderer Strahlwinkel des Bündels 11 vorgesehen werden. Dies läßt sich durch die Fresnellinse 15 (Figur 2) oder 35 erreichen.

Die gezeigten Ausführungsbeispiele haben den Vorteil, daß nicht nur eine Ankopplung eines Lichtwellenleiters an eine Empfangsdiode sondern an einen Laser möglich ist, da sowohl eine Abbildungsoptik als auch eine Justagemöglichkeit vorgesehen ist.

Anders als bei der bekannten Lösung nach der DE 39 14 835 Cl ist der Laser durch einen Träger (Siliziumwafer) von der Faserseite getrennt, so daß keine Luft-Verbindung zwischen beiden besteht. Mit Hilfe der Trennung durch das Siliziumsubstrat ist eine hermetisch dichte Verkapselung des Lasers auf einfache Weise möglich.

## Patentansprüche

1. Anordnung zur Ankopplung eines Lichtwellenleiters (25, 65) an ein optisches Sende- oder Empfangselement (4) über wenigstens einen lichtdurchlässigen Träger (1') und eine Reflexionsfläche (22), die sich an dem Träger (1') befindet, wobei ein zweiter lichtdurchlässiger Träger (1) verschiebbar auf dem ersten Träger (1') aufliegt, indem eine Auflagefläche eines Trägers (1') eine Auflagefläche des anderen Trägers (1) berührt,
gekennzeichnet durch folgende Merkmale:
a) auf der der Auflagefläche gegenüberliegenden Kehrseite (20) des ersten Trägers (1') befindet sich der Lichtwellenleiter (25) und auf der der Auflagefläche gegenüberliegenden Kehrseite (2) des zweiten Trägers (1) befindet sich das Sende- oder Empfangselement (4),
b) der Verlauf des Lichtbündels (11) zwischen Lichtwellenleiter (25, 65) und Sende- oder Empfangselement (4) kreuzt die Auflageflächen.

2. Anordnung zur Ankopplung eines Lichtwellenleiters nach Anspruch 1, dadurch gekennzeichnet, daß zwischen den Trägern (1,1') eine lichtdurchlässige Zwischenlage dazwischengeschaltet ist.

3. Anordnung nach Anspruch 1 oder 2, dadurch gekennzeichnet, daß die Reflexionsfläche (22) totalreflektierend ist.

4. Anordnung nach Anspruch 3, dadurch gekennzeichnet, daß jeder Träger (1',1) eine totalreflektierende Reflexionsfläche (22,9) aufweist.

5. Anordnung nach Anspruch 1, dadurch gekennzeichnet, daß auf derjenigen Kehrseite (2), auf welcher das Sende- bzw. Empfangselement (4) angeordnet ist, auch ein optisches Element (5) zur Lichtbündelung vorgesehen ist.

6. Anordnung nach Anspruch 2, dadurch gekennzeichnet, daß diejenige Kehrseite (2) mit dem Sende- bzw. Empfangselement (4) auch noch ein optisches Element (5) zur Lichtbündelung trägt.

7. Anordnung nach einem der vorangehenden Ansprüche, dadurch gekennzeichnet, daß der Lichtwellenleiter ein Streifenwellenleiter (65) ist.

8. Anordnung nach Anspruch 1, 3 bis 5 oder 7, dadurch gekennzeichnet, daß sich auf den Auflageflächen jeweils gegenüberliegenden Kehrseiten (20,2) der Träger (1',1) jeweils der Lichtwellenleiter (25, 65) bzw. das Sende- oder Empfangselement (4) befindet.

9. Anordnung nach einem der vorangehenden Ansprüche, dadurch gekennzeichnet, daß das Licht zwischen der Reflexionsfläche (22) und den Auflageflächen durch einen Träger (1') hindurchtritt.

10. Anordnung nach den Ansprüchen 4 und 9, dadurch gekennzeichnet, daß das Licht zwischen den Reflexionsflächen (22,9) durch beide Träger (1,1') hindurchtritt.
